# EUROPÄISCHE PATENTANMELDUNG

(11) **EP 1 106 858 A1**
(43) Veröffentlichungstag der Anmeldung: **13.06.2001**
(21) Anmeldenummer: 00126152.8
(22) Anmeldetag: 30.11.2000
(51) Int. Cl.: F16D 43/284

(54) **Ringkolbenanordnung einer Getriebekupplung**

(30) Priorität: 01.12.1999 DE 19957908
(71) Anmelder: Ford Global Technologies, Inc., A subsidiary of Ford Motor Company, Dearborn, Michigan 48126 (US)
(72) Erfinder: Kohl, Ernst, 50968 Köln (DE)
(74) Vertreter: Drömer, Hans-Carsten, Dipl.-Ing.

(57) **Zusammenfassung**

Die Erfindung betrifft eine Ringkolbenanordnung zur Vermeidung des Kupplungsrupfens bei einer Kupplung insbesondere für Getriebe in Kraftfahrzeugen, wobei die Kupplung mittels eines Ringkolbens 1, der vom Druck des Getriebeöls beaufschlagt ist, betätigt wird. Sie ist dadurch gekennzeichnet, daß ein im wesentlichen kreisringförmiger Ventilsteuerkolben 2 in einer im wesentlichen kreisringförmigen Ausnehmung im Ringkolben 1 drehbar gelagert ist.

Die Drehträgheit des Ventilsteuerkolbens 2 wird ausgenutzt, um bei einer Schwingungsanregung des Ringkolbens 1 durch das Kupplungsrupfen eine relative Verdrehung des Ventilsteuerkolbens 2 gegenüber dem Ringkolben 1 zu erzeugen. Diese Verdrehung wird benutzt zur Steuerung des Öldruckes im Ringkolben 1, wodurch der Anpreßdruck auf die Kupplung variiert werden kann. Bei geeigneter Auslegung wirkt dies der Schwingungsanregung aus dem Kupplungsrupfen entgegen und verhindert damit das Kupplungsrupfen.

## Beschreibung

Die Erfindung betrifft eine Ringkolbenanordnung zur Vermeidung des Kupplungsrupfens bei einer Kupplung insbesondere für Getriebe in Kraftfahrzeugen, wobei die Kupplung mittels eines Ringkolbens, der vom Druck des Getriebeöls beaufschlagt ist, betätigt wird.

Kupplungsrupfen ist eine bekannte Erscheinung bei Kupplungen in Automatik- und Handschaltgetrieben, wird vom Motor angeregt und tritt dann merklich auf, wenn es sich im Resonanzbereich des Abtriebs befindet. Vor allem bei Getrieben, bei denen die Kupplung als Mehrscheiben-Lamellenkupplung ausgeführt ist, läßt sich dies auch bei geeigneter Auswahl des Getriebeöls nicht verhindern. Durch Alterung des Öls und seiner Additive sowie durch Änderung der Lamellenbelagsoberfläche während des Betriebes kann es jederzeit wieder auftreten.

Durch konstruktive Maßnahmen wie Dämpfungsglieder im Abtriebsstrang kann die Schwingungsanregung durch das Kupplungsrupfen gedämpft werden. Dies ist jedoch aufwendig und nur eine Abstellmaßnahme, verhindert das Rupfen an sich nicht.

Aus der DE 3817677 A1 ist eine automatische Steuerung einer Kupplungsvorrichtung für zwei rundlaufende Wellen bekannt. Diese umfaßt einen ringförmigen Steuerkolben für die Kupplung, der von einer Druckflüssigkeit beaufschlagt wird, wobei der Zufluß der Druckflüssigkeit von einem im Steuerkolben drehbar angeordneten, ringförmigen Drehschieber gesteuert wird. Der Drehschieber ist drehbar gegenüber der einen Welle gelagert und wird durch Flüssigkeitsreibung, bedingt durch einen Drehzahlunterschied zwischen den beiden Wellen, gegenüber dem Steuerkolben leicht verdreht und öffnet bzw.

schließt dadurch die Druckflüssigkeitsversorgung für den Steuerkolben. Aufgabe der Erfindung ist es, bei relativen Drehzahlunterschieden zwischen den Wellen den Steuerkolben mit Druckflüssigkeit zu beaufschlagen, damit der Steuerkolben die Kupplung zwischen den Wellen schließt und damit ein Durchdrehen einer Welle verhindert.

Diese Anordnung ist dafür vorgesehen, einen zwischen zwei Wellen bestehenden Drehzahlunterschied auszugleichen. Sie ist jedoch nicht geeignet, die Schwingungsanregung beim Kupplungsrupfen zu unterbinden.

Aufgabe der Erfindung ist es deshalb, eine Ringkolbenanordnung zu schaffen, die das Kupplungsrupfen direkt am Ort des Entstehens unterbindet, und die einfach und robust aufgebaut ist.

Gelöst wird die Aufgabe durch die kennzeichnenden Merkmale des Anspruches 1.

Die Drehträgheit des Ventilsteuerkolbens wird ausgenutzt, um bei einer Schwingungsanregung des Ringkolbens durch das Kupplungsrupfen eine relative Verdrehung des Ventilsteuerkolbens gegenüber dem Ringkolben zu erzeugen. Diese Verdrehung wird benutzt zur Steuerung des Öldruckes im Ringkolben, wodurch der Anpreßdruck auf die Kupplung variiert werden kann. Bei geeigneter Auslegung wirkt dies der Schwingungsanregung aus dem Kupplungsrupfen entgegen und verhindert damit das Kupplungsrupfen.

Zwischen Ventilsteuerkolben und Ringkolben ist eine Feder für die Übertragung der Drehbewegung angeordnet. Abhängig von der Federsteifigkeit, der Drehträgheit des Ringkolbens und der Anregungsfrequenz des Kupplungsrupfens ergibt sich damit die relative Verdrehung zwischen Ventilsteuerkolben und Ringkolben.

Zwischen Ventilsteuerkolben und Ringkolben ist eine Ventileinheit angeordnet, mittels welcher bei einer gegenseitigen Verdrehung von Ventilsteuerkolben und Ringkolben ein Ventil betätigt wird. Abhängig von der relativen Verdrehung zwischen Ventilsteuerkolben und Ringkolben öffnet oder schließt das Ventil mehr oder weniger. Dabei kann der Öldruck im Ringkolben entweder verringert werden, indem Öl abgelassen wird, oder aber erhöht werden, indem zusätzlich Drucköl eingelassen wird. Diese kurzeitige Veränderung des Öldruckes ändert den Anpreßdruck des Ringkolbens auf die Kupplung und wirkt somit der Schwingungserregung entgegen.

In einer bevorzugten Ausführungsform weist der Ventilsteuerkolben eine Aussparung im Kreisring auf, in die eine am Ringkolben angeordnete Ventileinheit hineinragt. Da der Ventilsteuerkolben nur relativ kleine Verdrehungen gegenüber dem Ringkolben ausführt, genügt ein kleine Aussparung im Ventilsteuerkolben. Die in der Ausparung angeordnete Ventileinheit ergibt somit einen sehr platzsparenden Aufbau.

Als weitere bevorzugte Ausführungsform weist die Ventileinheit eine T-Form auf, ist mit dem Fuß am Ringkolben befestigt ist und ragt mit dem T-Stück in den Ventilsteuerkolben hinein. Die Feder ist in der Aussparung des Ventilsteuerkolbens zwischen Ventilsteuerkolben und Kopf der T-förmigen Ventileinheit angeordnet, während das Ventil in der Aussparung des Ventilsteuerkolbens zwischen Ventilsteuerkolben und Kopf der T-förmigen Ventileinheit gegenüber der Feder angeordnet ist. Die T-Form der Ventilheit benötigt nur wenig Bauraum, erlaubt aber die Integration aller Bauelemente, die zur Steuerung der Ringkolbeneinheit zur Vermeidung des Kupplungsrupfens notwendig sind.

In den Zeichnungen ist ein Ausführungsbeispiel der Erfindung dargestellt. Es zeigen:
- **Fig. 1**: einen Längsschnitt durch eine stufenloses Kraftfahrzeuggetriebe als Übersichtskizze für die Einbaulage der Ringkolbenanordnung;
- **Fig. 2a**: eine Prinzipskizze einer erfindungsgemäßen Ringkolbenanordnung mit geschlossenem Ventil; und
- **Fig. 2b**: eine Prinzipskizze einer erfindungsgemäßen Ringkolbenanordnung mit geöffnetem Ventil.

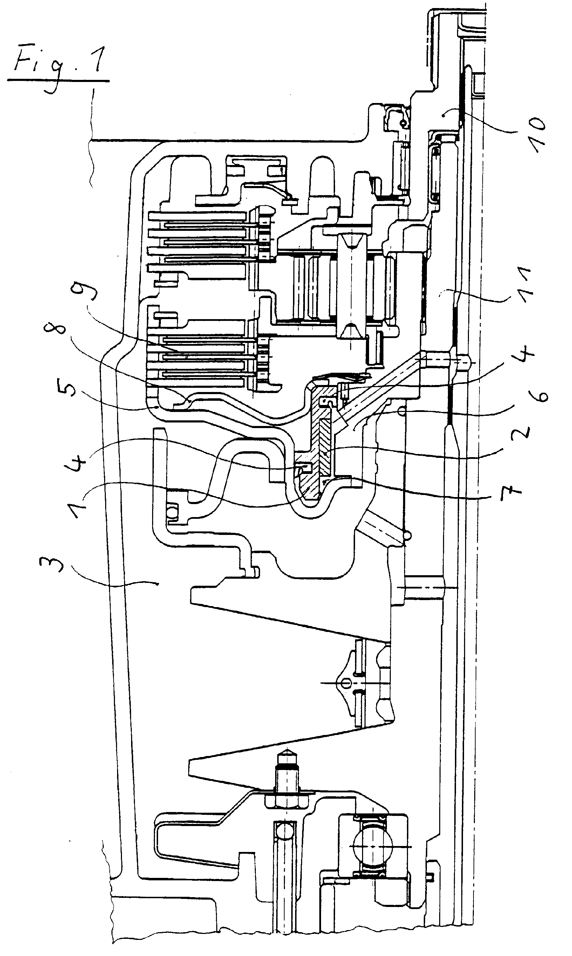

**Fig. 1** zeigt die Einbaulage einer Ringkolbenanordnung mit dem Ringkolben 1 und dem Ventilsteuerkolben 2 in einem stufenlosen Kraftfahrzeuggetriebe 3. Der Ringkolben 1 weist am äußeren und am inneren Umfang Ringdichtungen 4 auf, mit denen gegenüber dem Kupplungszylinder 5 und dem Sonnenrad 6 ein Druckraum 7 abgedichtet ist. Bei Druckbeaufschlagung im Druckraum 7 wird der Ringkolben 1 gegenüber dem Kupplungszylinder 5 verschoben und drückt die Druckplatte 8 auf das Lamellenpaket 9 der Kupplung. Dadurch überträgt die Kupplung das Drehmoment der Antriebswelle 10, die vom Motor angetrieben ist, auf die Abtriebswelle 11, die kraftschlüssig mit den Antriebsrädern verbunden ist.

Der Ringkolben 1 ist drehfest auf der Abtriebswelle 11 angeordnet. Alle Drehungen und Drehschwingungen des Abtriebsstranges übertragen sich damit auch auf den Ringkolben 1.

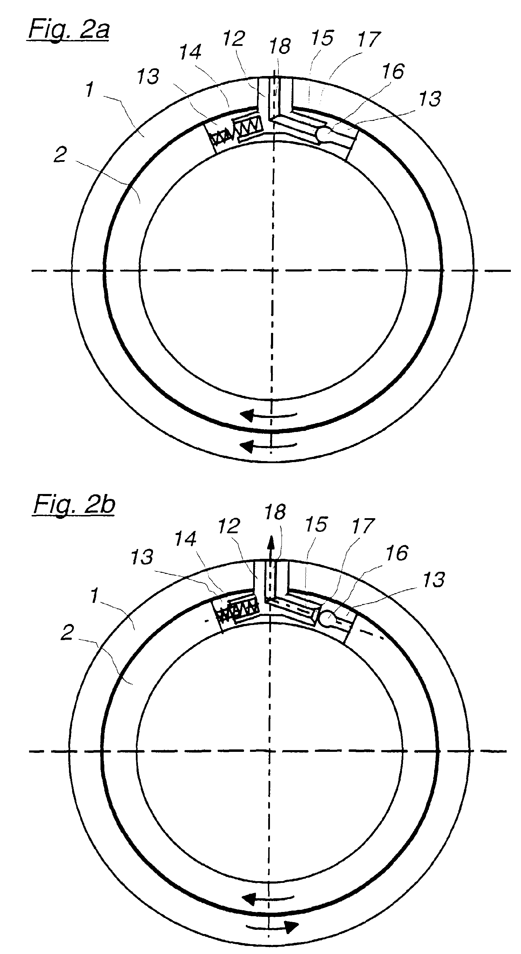

**Fig. 2a** zeigt den prinzipiellen Aufbau der Ringkolbenanordnung. Eine T-förmige Ventileinheit 12 ist mit dem Fuß am Ringkolben 1 angeordnet. Der Kopf der Ventileinheit 12 ragt in die Aussparung 13 des Ventilsteuerkolbens 2 und ist dort im wesentlichen in Umfangsrichtung ausgerichtet. Zwischen dem Kopf der Ventileinheit 12 und dem Ventilsteuerkolben 2 ist in der Aussparung 13 die Feder 14 angeordnet. Gegenüber der Feder 14 zwischen Ventileinheit 12 und Ventilsteuerkolben 2 ist in der Aussparung 13 das Ventil 15 angebracht, das im wesentlichen aus einem Kugelkopf 16 und einem Ventilsitz 17 besteht. Das Ventil 15 verschließt eine Auslaßbohrung 18, durch die der Öldruck aus dem Druckraum 7 entweichen kann.

Obwohl der Ventilsteuerkolben 2 leicht drehbar gegenüber dem Ringkolben 1 gelagert ist, tritt bei gleichmäßiger Drehung der Abtriebswelle 11 keine Relativdrehung zwischen Ventilsteuerkolben 2 und Ringkolben 1 auf, da die Feder 14 auf den Ventilsteuerkolben 2 eine Andruckkraft aufbringt, die den Kugelkopf 16 fest auf den Ventilsitz 17 drückt und damit zum einen die Relativdrehung unterbindet und gleichzeitig das Ventil 15 schließt.

Erst wenn, wie in **Fig. 2b** dargestellt, der normalen Drehbewegung der Abtriebswelle 11 eine Drehschwingung durch das Kupplungsrupfen überlagert wird, die auch der mit der Abtriebswelle 11 drehfest verbundene Ringkolben 1 erfährt, kann bei zu großen Drehbeschleunigungen der Ventilsteuerkolben 2 eine relative Drehbewegung zum Ringkolben 1 ausführen. Dies ist der Fall, wenn die Drehträgheitskraft des Ventilsteuerkolbens 2 die Andruckkraft der Feder 14 überschreitet und damit das Ventil 15 geöffnet wird.

Bei einem typischen stufenlosem Kraftfahrzeuggetriebe hat das Kupplungsrupfen etwa eine Frequenz von 5 Hz, eine Drehzahlamplitude von 100-200 1/min und eine Schwingungsbeschleunigung bis zu 200 rad/s². Bei kleinen Schwingungsbeschleunigungen ist die Andruckkraft der Feder 14 größer der Drehträgheitskraft des Ventilsteuerkolbens 2.

Erst wenn eine kritische Schwingungsbeschleunigung überschritten wird, übersteigt die Drehträgheitskraft des Ventilsteuerkolbens 2 die Andruckkraft der Feder 14 und der Kugelkopf 16 hebt kurz vom Ventilsitz 17 ab. Dadurch wird im Druckraum 7 der Öldruck über die Auslaßbohrung 18 abgebaut und der Anpreßdruck des Ringkolbens 1 auf das Lamellenpaket 9 reduziert. Es tritt eine Phasenverschiebung zwischen Erregerfrequenz des Antriebes und der Frequenz des Kupplungsrupfen auf, wodurch die beginnende Schwingungserregung sofort unterbunden wird.

## Patentansprüche

1. Ringkolbenanordnung bei einer Kupplung insbesondere für Getriebe in Kraftfahrzeugen, wobei die Kupplung mittels eines Ringkolbens (1), der vom Druck des Getriebeöls beaufschlagt ist, betätigt wird, und wobei ein im wesentlichen kreisringförmiger Ventilsteuerkolben (2) in einer im wesentlichen kreisringförmigen Ausnehmung im Ringkolben (1) drehbar gelagert ist,
**dadurch gekennzeichnet**, daß
zwischen Ventilsteuerkolben (2) und Ringkolben (1) eine Feder (14) für die Übertragung der Drehbewegung und eine Ventileinheit (12), mittels welcher bei einer gegenseitigen Verdrehung von Ventilsteuerkolben (2) und Ringkolben (1) ein Ventil (15) betätigt wird, angeordnet sind.

2. Ringkolbenanordnung nach Anspruch 1,
**dadurch gekennzeichnet**, daß
der Ventilsteuerkolben (2) eine Aussparung (13) im Kreisring aufweist, in die eine am Ringkolben (1) angeordnete Ventileinheit (12) hineinragt.

3. Ringkolbenanordnung nach Anspruch 3,
**dadurch gekennzeichnet**, daß
die Ventileinheit (12) eine T-Form aufweist, die mit dem Fuß am Ringkolben (1) befestigt ist und mit dem Kopf in den Ventilsteuerkolben (2) hineinragt.

4. Ringkolbenanordnung nach Anspruch 3,
**dadurch gekennzeichnet**, daß
die Feder (14) in der Aussparung (13) des Ventilsteuerkolbens (2) zwischen Ventilsteuerkolben (2) und Kopf der T-förmigen Ventileinheit (12) angeordnet ist.

5. Ringkolbenanordnung nach Anspruch 4,
**dadurch gekennzeichnet**, daß
Das Ventil (15) in der Aussparung (13) des Ventilsteuerkolbens (2) zwischen Ventilsteuerkolben (2) und Kopf der T-förmigen Ventileinheit (12) gegenüber der Feder (14) angeordnet ist.
